# EUROPÄISCHE PATENTSCHRIFT

(11) **EP 0 612 382 B1**
(45) Veröffentlichungstag und Bekanntmachung des Hinweises auf die Patenterteilung: **05.06.1996**
(21) Anmeldenummer: 92922156.2
(22) Anmeldetag: 23.10.1992
(51) Int. Cl.: F16D 65/847, F02B 33/34

(54) **FAHRZEUG MIT LUFTGEKÜHLTEN REIBUNGSBREMSEN UND AUFGELADENEM BRENNKRAFTMOTOR**
VEHICLE WITH AIR-COOLED FRICTION BRAKES AND SUPERCHARGED INTERNAL-COMBUSTION ENGINE
VEHICULE MUNI DE FREINS A FRICTION REFROIDIS PAR AIR ET D'UN MOTEUR A COMBUSTION INTERNE SURALIMENTE

(30) Priorität: 22.11.1991 DE 4138464
(43) Veröffentlichungstag der Anmeldung: 31.08.1994
(73) Patentinhaber: KNORR-BREMSE AG, 80809 München (DE)
(72) Erfinder: HARTMANN, Albrecht, D-8000 München 50 (DE)
(86) Internationale Anmeldenummer: DE9200898
(87) Internationale Veröffentlichungsnummer: WO9310369

(56) Entgegenhaltungen:
- FR-A- 1 321 559
- FR-A- 1 383 257
- FR-A- 1 405 309
- FR-A- 2 285 547
- US-A- 2 011 336

## Beschreibung

Die Erfindung bezieht sich auf ein Fahrzeug mit einem dem Fahrzeugbetrieb dienenden, vermittels eines Laders aufladbaren Brennkraftmotor, mit luftgekühlten Reibungsbremsen, insbesondere Scheibenbremsen, nach dem Oberbegriff des Anspruches 1.

Für Fahrzeuge, insbesondere Schienenfahrzeuge, sind luftgekühlte Reibungsbremsen bekannt, bei welchen ein rotierender Bremskörper, insbesondere eine Bremsscheibe, ventilatorartig ausgebildet ist, um bei seiner Rotation einen Kühlluftstrom für diese Reibungsbremse zu erzeugen. Dabei bedarf es besonderer Zusatzeinrichtungen, damit bei ungebremster Fahrt mit kühlen Reibungsbremsen nicht ständig ein energieverzehrender, unnützer Kühlluftstrom gefördert wird. Es ist auch bekannt, die Reibungsbremsen durch Fahrtwind zu kühlen, wobei der Fahrtwind unmittelbar oder durch besondere Luftkanäle zu den zu kühlenden Stellen der Reibungsbremse geführt wird. Beiden vorstehend erwähnten Ausführungen der Luftkühlung ist gemeinsam, daß mit sich verlangsamender Fahrgeschwindigkeit des Fahrzeuges der Kühlluftstrom abnimmt, bis er bei Stillstand des Fahrzeuges vollständig verschwindet, obwohl die Reibungsbremsen sehr heiß sein können und dringend einer Kühlung bedürfen. Es ist auch bereits bekannt, den Kühlluftstrom durch besondere Ventilatoren zu erzeugen, welche motorisch, insbesondere durch Elektromotore, angetrieben sind. Bei dieser Ausbildung ist zwar ein Aufrechterhalten des Kühlluftstromes auch im Fahrzeugstillstand möglich, doch müssen die Ventilatoren leistungsfähig sein, wodruch sie mitsamt ihrer Antriebsmotoren aufwendig und teuer sind, und zudem erfordert der Ventilatorantrieb zusätzliche, teure Energie. Es sind auch Kombinationen der vorstehend erwähnten Luftkühlungen für Reibungsbremsen bekannt.

Für durch einen Brennkraftmotor angetriebene Fahrzeuge ist der Einsatz von mechanisch angetriebenen Ladern bekannt. Die durch die Lader bewirkbare Aufladung des Brennkraftmotors dient der Steigerung der Motorleistung und damit der Beschleunigung und/oder der Höchstgeschwindigkeit des Fahrzeuges. Dabei ist es des weiteren bekannt, den mechanisch angetriebenen Lader zu- und abschaltbar zu machen. Zugeschaltet wird der Lader nur dann, wenn eine hohe Motorleistung gefordert wird. Durch die Abschaltmöglichkeit des mechanisch angetriebenen Laders kann eine beachtliche Kraftstoffmenge eingespart werden in Vergleich zu einem leistungsgleichen Saugmotor. Für aufgeladene Brennkraftmotore ist es allgemein bekannt, gesteuert oder selbsttätig schaltende Luftführungsklappen vorzusehen, mittels welchen überschüssige, vom Brennkraftmotor nicht verwertbare Ladeluftmengen in die Atmosphäre entlassbar sind; dieser Auslass von aufgeladener Ladeluft stellt einen Energieverlust dar, für welchen unnütz Kraftstoff verbraucht wird.

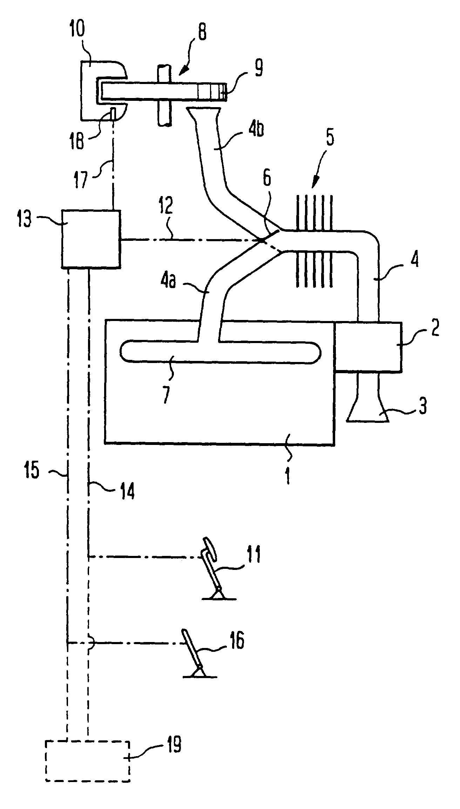

Aus der FR-A-1 321 559, Fig. 9, ist eine Einrichtung der eingangs genannten (gattungsbildenden) Art bekannt, wobei der Lader als abgasbetriebener Turbolader ausgebildet ist. Hieraus resultieren die Mängel, daß im Bremsbetrieb eine Motorbremse mit in den Abgaskanal eingeordneter Motorbremsklappe kaum verwendbar ist, die Bremsung vom Motor also nur schwach unterstützbar ist, und daß der Turbolader vom im Schubbetrieb nur schwachen Abgasstrom des Motors nur schwach angetrieben wird und nur einen dementsprechend schwachen Kühlluftstrom liefert.

Für Straßenfahrzeuge sind automatische Blockier- und Schleuderschutz- einrichtungen (ABS und ASR) bekannt, welche insbesondere aus raddrehzahl- und motorleistungsanforderungsabhängigen Meßsignalen, bisweilen auch fahrzeugbeschleunigungs- bzw. versögerungsabhängigen Meßsignalen und ggf. einer Reihe weiterer Signale die Antriebs- und Bremsleistung des Fahrzeuges derart steuern, daß ein Durchdrehen bzw. Blockieren der Fahrzeugräder vermieden wird. Aus derartigen Einrichtungen sind in einfacher Weise Signale gewinnbar, welche eine Betätigung der Reibungsbremsen des Fahrzeuges oder eine Leistungsanforderung an den Brennkraftmotor anzeigen. Weiterhin sind Kalkulationsvorrichtungen bekannt, welche aus Meßsignalen für die Bremsbetätigungszeiten und zugehörende Bremsstärken und ggf. der Fahrgeschwindigkeit und der Umgebungstemperatur die Temperatur an den Reibungsbremsen errechnen.

Es ist Aufgabe der Erfindung, ein Fahrzeug der eingangs genannten Art derart auszugestalten, daß mit geringem Aufwand ein gutes Bremsverhalten und eine energiesparende Kühlluftförderung für die Reibungsbremsen erreichbar ist. Diese Aufgabe wird durch den Gegenstand des Anspruches 1 gelöst. Besonders vorteilhaft ist die Möglichkeit, die Stellung der Luftführungsklappe verschiedenen Schaltzuständen anpassen zu können.

Es ist ferner vorteilhaft, wenn der Lader vom Brennkraftmotor ständig mechanisch angetrieben ist. Dabei ist besonders vorteilhaft, daß der im Bremszustand des Fahrzeuges angetriebene Lader die Motorbremsleistung unterstützt, also letztlich dem Fahrzeug kinetische Energie entzieht und somit dessen Abbremsung reibungs- und verschleißfrei unterstützt, wodurch sich ein gutes Bremsverhalten ergibt.

Nach der weiteren Erfindung vorteilhafte Weiterbildungsmöglichkeiten eines derart ausgebildeten Fahrzeuges sind den Merkmalen der Unteransprüche entnehmbar. Dabei ist bei einer Ausbildung nach den Merkmalen des Unteranspruches 2 besonders vorteilhat, daß auch bei stillstehendem Fahrzeug ein Kühllfuftstrom verbleibt, durch den die erhitzten Reibungsbremsen weitergekühlt werden.

In der Zeichnung ist ein einfaches Auführungsbeispiel für die Erfindung rein schematisch dargestellt.

Ein im weiteren nicht dargestelltes Fahrzeug weist einen Brennkraftmotor 1 mit einem von diesem mechanisch angetriebenen Lader 2 auf, welcher wie üblich durch ein Ansaugluftfilter 3 angesaugte Verbrennungsluft als aufgeladene Ladeluft in einen Luftkanal 4 fördert. Der Luftkanal 4 führt durch einen Ladeluftkühler 5 und in der dargestellten Stellung einer Luftführungsklappe 6 weiter zu einem Abschnitt 4a des Luftkanals, welcher mit den Ansaugkanal 7 des Brennkraftmotors 1 in Verbindung steht. Wird die Luftführungsklappe 6 aus ihrer dargestellten, ersten Schaltstellung wie nachfolgend erläutert in ihre zweite Schaltstellung umgeschaltet, so führt der Luftkanal 4 durch den Ladeluftkühler 5 zu einem Abschnitt 4b des Luftkanals, welcher an einer Reibungsbremse 8 des Fahrzeuges endet. Die beispielsweise einem im weiteren nicht dargestellten Fahrzeugrad zugeordnete Reibungsbremse 8 ist als Scheibenbremse mit einer Bremsscheibe 9 und einem Bremssattel 10 gezeigt, sie ist durch Betätigen eines Breimpedals 11 des Fahrzeuges über nicht dargestellte Einrichtungen, beispielsweise ein mechanisches oder hydraulishes Gestänge und/oder vermittels entsprechender Drucklufteinrichtungen zuspannbar. Der Abschnitt 4b des Luftkanals endet in geeigneter Weise vor der Reibungsbremse 8, derart, daß ein aus seiner Mündung austretender Luftstrom die sich während Bremsungen erhitzende Reibungsbremse 8 optimal kühlt. Im Ausführungsbeispiel endet der Abschnitt 4b seitlich der Bremsscheibe 9, so daß diese vom Luftstrom angeblasen wird, selbstverständlich wäre hier in nicht dargestellter Weise durch eine Abzweigung vom Abschnitt 4b ein symmetrisches, beidseitiges Anblasen der Bremsscheibe 9 zweckmäßig. Es ist jedoch auch möglich, den Luftstrom derart einer innengekühlten, also mit radialen Kühlluftkanälen versehenen Bremsscheibe 9 zuzuführen, daß zumindest ein Teil des Luftstromes auch durch diese radialen Kanäle in der Bremsscheibe strömt. Weiterhin kann es zweckmäßig sein, einen Teil des der Reibungsbremse 8 durch den Abschnitt 4b zugeführten Kühlluftstromes dem Bremssattel 10 und insbesondere den in diesem wie üblich gehalterten Reibbelägen zuzuführen. Es ist selbstverständlich, daß vom Abschnitt 4b des Luftkanals nicht dargestellte Zweigleitungen zu den ebenfalls nicht dargestellten Reibungsbremsen der weiteren Fahrzeugräder führen, um die dortigen Reibungsbremsen mit Kühlluft versorgen.

Die Luftführungsklappe 6 ist vermittels einer Steuerleitung 12 bzw. eines Steuergestänges von einem Steuergerät 13 schaltbar, dem Steuergerät 13 werden durch zwei Signalleitungen 14 und 15 beim Betätigen des Bremspedals 11 ein Bremssignal und beim Betätigen eines Gaspedals 16 ein Leistungssignal zugeführt. Zusätzlich kann dem Steuergerät 13 durch eine Signalleitung 17 ein die jeweilige Temperatur der Reibungsbremse 8, insbesondere der Bremsscheibe 9 bzw. der Reibbeläge im Bremssattel, anzeigendes Signal zugeführt werden. Das Steuergerät 13 steuert die Luftführungsklappe 6 bei eine Leistungsanforderung an den Brennkraftmotor 1 anzeigendes Betätigung des Gaspedals 16 und damit bei in der Signalleitung 15 anstehendem Leistungssignal in die dargestellte, erste Schaltstellung, in welcher die Luftführungsklappe 6 den Luftkanal 4 durch den Abschnitt 4a mit dem Ansaugkanal 7 verbindet und in welcher der Abschnitt 4b vom Luftkanal 4 abgetrennt ist. Es ist somit die volle Leistung des aufgeladenen Brennkraftmotors 1 erreichbar. Bei unbetätigtem Gaspedal 16 und Betätigung des Bremspedals 11 veranlaßt das in der Signalleitung 14 anstehende Bremssignal das Steuergerät 13 zum Umschalten der Luftführungsklappe 6 in die nur gestrichelt dargestellte, zweite Schaltstellung, in welcher die Luftführungsklappe 6 den Luftkanal 4 mit dem Abschnitt 4b unter Abtrennen des Abschnittes 4a verbindet. In dieser zweiten Schaltstellung der Luftführungsklappe 6 wird der vom Lader 2 geförderte Luftstrom der Reibungsbremse 8 zugeführt und wirkt dort als Kühlluftstrom für die sich infolge des Bremsvorganges erwärmenden bzw. erhitzenden Teile. Der Ladeluftkühler 5 stellt dabei sicher, daß ein ggf. durch den Lader 2 erhitzter Luftstrom jedenfalls gekühlt zur Reibungsbremse 8 gelangt und somit diese auch wirkungsvoll zu kühlen vermag; besonders wesentlich ist dies, falls der Lader 2 selbst durch vorangehenden Ladebetrieb erhitzt ist.

Während Bremsungen wird also der Lader 2 weiterhin angetrieben, während die Saugleitung 7 abgesperrt ist. Hierdurch wird die Bremsleistung des Brennkraftmotors 1 gesteigert, dieser unterstützt also reibungs- und verschleißfrei den Bremsvorgang.

Durch das dem Steuergerät 13 durch die Signalleitung 17 zugeführte Temperatursignal kann das Steuergerät 13 veranlaßt werden, ein Umschalten der Luftführungsklappe 6 in deren zweite Schaltstellung nur dann vorzunehmen, wenn an der Reibungsbremse 8 eine bestimmte Temperaturgrenze überschritten wird. Hierdurch ist erreichbar, daß bei nur kurzzeitigen, schwachen Bremsungen eine Aufladebereitschaft für den Brennkraftmotor 1 bestehen bleibt, erforderlichenfalls also die volle Aufladeleistung des Brennkraftmotors 1 schnell einsetzbar ist. Zum Vereinfachen und Verbilligen der Einrichtung können jedoch diese Funktion mitsamt der Signalleitung 17 und dem Temperaturfühler 18 auch entfallen.

Es ist zweckmäßig, das Steuergerät 13 derart auszugestalten, daß es nach einer Bremsbetätigung beim Freigeben des Bremspedals 11 und weiterhin unbetätigtem Gaspedal 16, wie es insbesondere bei Erreichen des Stillstandes des Fahrzeuges auftritt, nach Abklingen des Bremssignals in der Signalleitung 14 die Luftführungsklappe 6 nur zeitlich verzögert aus ihrer zweiten in die erste Schaltstellung zurückschaltet. Hierdurch wird erreicht, daß nach dem Anhalten des Fahrzeuges die Reibungsbremse 8 für diese Verzögerungszeitspanne weiterhin einen wenn auch verminderten Kühlluftstrom erhält, da der Lader 2 auch bei Leerlauf des Brennkraftmotors 1 noch einen Luftstrom fördert. Die durch den vorangehenden Bremsvorgang erhitzte Reibungsbremse 8 wird daher weitergekühlt, so daß für eine nachfolgende Fahrt des Fahrzeuges relativ kühle Reibungsbremsen zur Verfügung stehen, was sich auf die Bremssicherheit, den Verschleiß und das Bremsverhalten günstig auswirkt. Ein Aufschaukeln der Bremsentemperatur im Go and Stop-Betrieb des Fahrzeuges wird hierdurch vermieden.

Falls bei einem Fahrzeug eine ständige Bereitshaft zu hohen Motorleistungen vor Bremsverschleiß und -verhalten vorrangig ist, kann es in folgender Weise weiter ausgebildet werden:

Sollte während der Verzögerungszeit das Gaspedal 16 betätigt werden und somit in der Signalleitung 15 ein Leistungsignal auftreten, so unterbricht das Steuergerät 13 die Verzögerungszeit und schaltet die Luftführungsklappe 6 sofort in die dargestellte, erste Schaltstellung zurück. Am Fahrzeug steht damit sofort die volle Leistung des aufgeladenen Brennkraftmotors 1 zur Verfügung, bei der Fahrt können die ggf. noch heißen Reibungsbremsen 8 abkühlen. Sollte eine alsbaldige Bremsung erforderlich sein, so können die Reibungsbremsen 8 sich ausnahmsweise über das übliche Maß erhitzen, was jedoch keinen Bremsenausfall, sondern lediglich einen erhöhten Verschleiß und verschlechtertes Verhalten zur Folge hat.

Abweichend zu diesem Steuerungsverhalten kann bei vorrangigen Anforderungen an Bremsen, Sicherheit, Verschleiß und Verhalten das Steuergerät 13 auch derart ausgelegt werden, daß es bei Überschreiten einer bestimmten Temperaturgrenze an der Reibungsbremse 8 und damit einem entsprechenden Temperatursignal in der Signalleitung 17 die Luftführungsklappe 6 jedenfalls in deren zweite Schaltstellung schaltet, so daß die Reibungsbremsen 8 gekühlt werden, am Brennkraftmotor 1 jedoch keine aufgeladene Ladeluft, sondern lediglich durch ein nicht dargestelltes Rückschlagventil angesaugte Atmosphärenluft zur Verfügung steht. Bei diesem Schaltverhalten weist das Fahrzeug bei erhitzten Reibungsbremsen eine verringerte Motorleistung entsprechend dem nicht aufgeladenen Betriebszustand des Brennkraftmotors auf.

Das Brems- und das Leistungssignal für die Signalleitungen 14 ud 15 müssen nicht durch unmittelbar am Bremspedal 11 bzw. Gaspedal 16 angeordnete und bei deren Betätigung mitzubetätigende Schalter gewonnen werden, die Schaltvorrichtungen für diese Signale können auch von einem an die genannten Pedale angeschlossenen Steuergestänge irgendwelcher Art gewinnbar sein, insbesondere kann das Bremssignal bei einer Druckmittelbremse durch einen Druckschalter bei Auftreten eines Bremsdruckes schaltbar sein. Bei einem Fahrzeug mit einer automatischen Blockier- und Schleuderschutzeinrichtung (ABS und ASR; in der Zeichnung gestrichelt dargestellt und mit der Bezugszahl 19 bezeichnet) ist es zweckmäßig, wenn das Steuergerät 13 den Fahrzustand des Fahrzeuges aus in der Blockier- und Schleuderschutzeinrichtung anstehenden, ihm zugeführten Signalen ermittelt: Es können dann besondere, in Abhängikeit von der Betätigung des Brems- bzw. Gaspedals 11 bzw. 16 schaltende Schalteinrichtungen entfallen.

Zum Vereinfachen ist es auch möglich den Ladeluftkühler 5 wegzulassen. Neben einer Leistungsverminderung des Brennkraftmotors 1 ergibt sich hierbei doch eine wirksame Kühlung der Reibungsbremse 8, da der Lader 2 im Kühlbetrieb für die Reibungsbremse 8 die in den Luftkanal 4 zu fördernde Luft nur geringfügig komprimieren muß, der hierbei den Luftkanal 4 durchströmende Luftstrom also nur eine sehr geringe Kompressions-Aufheizung erfährt. Demgemäß ist es bei vorhandenem Ladeluftkühler 5 und entsprechendem, baulichen Gegebenheiten auch möglich, die Verzweigung des Luftkanals 4 in die Abschnitte 4a und 4b zwischen dem Lader 2 und dem Ladeluftkühler 5 vorzusehen: Bei ggf. wesentlich vereinfachter Anordnung des Abschnittes 4b des Luftkanals ergibt sich hierbei lediglich eine geringe Verschlechterung der Kühlung für die Reibungsbremse 8.

Zur Temperaturerfassung der Reibungsbremse 8 ist es auch möglich, anstelle des Temperaturfühlers 18 eine Kalkulationsvorrichtung bekannter Art vorzusehen, welche aus den Betätigungszeiten der Reibungsbremse, der Betätigungsstärke, und ggf. der Fahrgeschwindigkeit und der Umgebungstemperatur die an der Reibungsbremse 8 herrschende Temperatur errechnet.

### Bezugszeichenliste

- 1: Brennkraftmotor
- 2: Lader
- 3: Ansaugfilter
- 4: Luftkanal 4a,4b Abschnitt
- 5: Ladeluftkühler
- 6: Luftführungsklappe
- 7: Ansaugkanal
- 8: Reibungsbremse
- 9: Bremsscheibe
- 10: Bremssattel
- 11: Bremspedal
- 12: Steuerleitung
- 13: Steuergerät
- 14: Signalleitung
- 15: Signalleitung
- 16: Gaspedal
- 17: Signalleitung
- 18: Temperaturfühler
- 19: Blockier- und Schleuderschutzeinrichtung

## Patentansprüche

1. Fahrzeug mit einem dem Fahrzeugbetrieb dienenden, vermittels eines Laders (2) aufladbaren Brennkraftmotor (1), wobei der Lader (2) vom Brennkraftmotor mechanisch angetrieben ist, mit luftgekühlten Reibungsbremsen (8), insbesondere Scheibenbremsen, und mit einer Luftfördereinrichtung für einen den Reibungsbremsen (8) durch wenigstens einen Luftkanal (4,4b) zuzuführenden Kühlluftstrom, wobei der Luftfördereinrichtung eine in einen den vom Lader (2) geförderten Luftstrom führenden Luftkanal (4,4a,4b) eingeordnete, schaltbare Luftführungsklappe (6) zugehört, welche sich zumindest während mit hohen Leistungsanforderungen an dem Brennkraftmotor (1) verbundenen Fahrzuständen des Fahrzeuges in einem den Luftstrom dem Brennkraftmotor (1) zuführenden, ersten Schaltzustand und im Bremszustand des Fahrzeuges sich in einem zweiten Schaltzustand befindet, in welchem der Luftstrom unter Abtrennung vom Brennkraftmotor (1) als Kühlluftstrom den Reibungsbremsen (8) zugeleitet wird, **gekennzeichnet durch**:
- ein Steuergerät (13) für die Luftführungsklappe (6), welchem, ein beim Betätigen des Bremspedals (11) des Fahrzeuges unmittelbar mit diesem oder von einem dem Bremspedal (11) nachgeordneten, mechanischen, hydraulischen oder pneumatischen Gestänge schaltbaren Bremsschalter einschaltbares Bremssignal und ein beim Betätigen des Gaspedal (16) des Fahrzeuges unmittelbar mit diesem oder von einem diesem nachgeordneten Gestänge schaltbaren Leistungsschalter einschaltbares Leistungssignal zugeführt (Signalleistungen 14 und 15) werden und welches die Luftführungsklappe (6) in Abhängigkeit von diesen Signalen bei Anstehen des Leistungssignals stets in die erste, bei alleinigem Anstehen des Bremssignals in die zweite Schaltstellung schaltet und welches vermittels einer Verzögerungseinrichtung bei Abfall des Bremssignals und fehlendem Leistungssignal die Rückschaltung der Luftführungsklappe (6) aus der zweiten in die erste Schaltstellung, bezogen auf den Zeitpunkt des Abfalls des Bremssignals, zeitlich verzögert; wobei
- die Luftführungsklappe (6) zu Beginn einer Betätigung der Reibungsbremsen (8) in den zweiten Schaltzustand geschaltet und bei Beendigung der Betätigung der Reibungsbremsen (8) mit zeitlicher Verzögerung in den ersten Schaltzustand rückgeschaltet wird, wobei bei Auftreten einer Leistungsanforderung an den Brennkraftmotor (1) unter Abbruch der zeitlichen Verzögerung ein sofortiges Rückschalten der Luftführungsklappe (6) in den ersten Schaltzustand erfolgt.

2. Fahrzeuge nach Anspruch 1, **gekennzeichnet durch** eine automatische Blockier- und Schleuderschutzeinrichtung (19) für die Fahrzeugräder, wobei das Steuergerät (13) für die Luftführungsklappe (6), welches aus in der Blockier- und Schleuderschutzeinrichtung (19) anstehenden, ihm zugeführten Signalen des jeweiligen Fahrzeuges ermittelt.

3. Fahrzeug nach Anspruch 1 und 2, **gekennzeichnet durch** eine direkte oder indirekte Temperaturüberwachung der Reibungsbremsen (8), wobei der zweite Schaltzustand der Luftführungsklappe (6) nur bei ermitteln einer eine festgelegte Schwellentemperatur übersteigenden Temperatur der Reibungsbremsen (8) durch die Temperaturüberwachung (Temperaturfühler 18, Signalleitung 17, Steuergerät 13) einstellbar ist.

4. Fahrzeug nach Anspruch 1 und 3, **dadurch gekennzeichnet**, daß die Temeraturüberwachung (Temperaturfühler 18, Signalleitung 17, Steuergerät 13) die Luftführungsklappe (6) bei vorliegen einer eine festgelegte Schwellentemperatur übersteigenden Temperatur an den Reibungsbremsen (8) die Luftführungsklappe stets in den zweiten Schaltzustand einstellt.

5. Fahrzeuge nach einem oder mehreren der vorstehenden Ansprüche, **dadurch gekennzeichnet**, daß die Luftführungsklappe (6) in einem dem Ladeluftkühler (5) nachgeordneten Abschnitt des Luftkanals (4, 4a, 4b) eingeordnet ist.

6. Fahrzeuge nach einem oder mehreren der vorstehenden Ansprüche, **dadurch gekennzeichnet**, daß der Lader vom Brennkraftmotor ständig mechanisch angetrieben ist.

## Claims

1. Vehicle with a supercharged internal combustion engine (1) serving for vehicle operation by means of a supercharger (2), the supercharger (2) being mechanically driven by the internal combustion engine, with air-cooled friction brakes (8), particularly disk brakes, and with an air feed device for feeding a cooling air flow to the friction brakes via at least one air duct (4, 4b), a switchable air-directing flap (6) arranged in an air duct (4, 4a, 4b) guiding the conveyed air flow from the supercharger (2) belonging to the air feed device, which, at least during driving conditions connected with high output demands on the internal combustion engine (1), is located in a first switch position feeding the air flow to the internal combustion engine (1) and, during braking of the vehicle, is located in a second switch position, in which the air flow is separated from the internal combustion engine (1) and fed as a cooling air flow to the friction brakes (8), characterised by:
- a control apparatus (13) for the air-directing flap (6), to which are fed, on activation of the brake pedal (11) of the vehicle, a brake signal activated directly by the pedal or via a brake circuit switchable by mechanical, hydraulic or pneumatic linkages inserted after the brake pedal (11) and a power signal activated, on actuation of the gas pedal (16) of the vehicle, either directly by the pedal or via a power switch switchable by linkages inserted downstream of the pedal (signal outputs 14 and 15), and which switches the air-direction flap (6) in dependence on these signals, when the power signal is present always to the first switch position and when only the brake signal is present to the second switch position, and which by means of a retarding device on decrease of the brake signal and in the absence of a power signal temporarily retards the switching back of the air-direction flap (6) from the second to the first switch position, with reference to the point in time of the decrease of the brake signal;
- the air circulation gill being switched at the beginning of an activation of the friction brakes (8) to the second switch position and, at the end of the activation of the friction brakes (8), being switched back to the first switch position, an immediate switching back of the air-direction flap (6) to the first switch position resulting from the occurrence of an output demand on the internal combustion engine (1), terminating the temporary retardation.

2. Vehicle according to claim 1, characterised by an automatic antilock and anti-skid system (19) for the vehicle wheels, the control apparatus (13) for the air-direction flap (6) determines the state of the vehicle from signals present in, and fed to it from, the antilock and anti-skid system (19).

3. Vehicle according to claims 1 and 2, characterised by a direct or indirect monitoring of the temperature of the friction brakes (8), the second switch position of the air-direction flap (6) being achievable only on determining, by the temperature monitoring device (thermometer probe 18, signal line 17, control apparatus 13), that the temperature of the friction brakes (8) exceeds a fixed threshold temperature .

4. Vehicle according to claims 1 and 3, characterised in that the temperature monitoring device (thermometer probe 18, signal line 17, control apparatus 13), when the temperature of the friction brakes (8) exceeds a fixed threshold temperature, adjusts the air-direction flap (6) to the second switch position.

5. Vehicle according to one or more of the previous claims, characterised in that the air-direction flap (6) is arranged in a section of the air duct (4, 4a, 4b) downstream of the supercharger air cooler (5).

6. Vehicle according to one or more of the previous claims, characterised in that the supercharger is permanently mechanically driven by the internal combustion engine.

## Revendications

1. Véhicule comportant un moteur à combustion interne (1) servant à faire fonctionner le véhicule et pouvant être suralimenté au moyen d'un compresseur à suralimentation (2), le compresseur à suralimentation (2) étant entraîné mécaniquement par le moteur à combustion interne, ce véhicule comportant des freins à friction (8) refroidis par air, notamment des freins à disque, et comportant un dispositif d'acheminement d'air pour un flux d'air de refroidissement devant être amené aux freins à friction (8) à travers au moins un conduit d'air (4, 4b), dispositif d'acheminement d'air dont fait partie un clapet de guidage d'air commutable (6) qui est inséré dans un conduit d'air (4, 4a, 4b) dirigeant le flux d'air refoulé par le compresseur à suralimentation (2) et qui se trouve, d'une part, au moins durant des états de marche du véhicule liés à de fortes demandes de puissance au moteur à combustion interne (1), dans un premier état de commutation, envoyant le flux d'air au moteur à combustion interne (1), et, d'autre part, dans l'état de freinage du véhicule, dans un second état de commutation, dans lequel le flux d'air, en étant isolé du moteur à combustion interne (1) est amené aux freins à friction (8), en tant que flux d'air de refroidissement, caractérisé par:
- un appareil de commande (13) pour le clapet de guidage d'air (6), auquel sont envoyés (lignes de transmission de signaux 14 et 15) un signal de freinage pouvant être mis en circuit en cas d'actionnement de la pédale de frein (11) du véhicule, directement à l'aide de cette dernière ou à l'aide de contacteurs de frein commutables par une timonerie mécanique, hydraulique ou pneumatique, disposée en aval de la pédale de frein (11), et un signal de puissance pouvant être mis en circuit en cas d'actionnement de la pédale d'accélérateur (16) du véhicule, directement à l'aide de cette dernière ou à l'aide de contacteurs de puissance commutables par une timonerie disposée en aval de la pédale d'accélérateur, et qui, en fonction de ces signaux, commute le clapet de guidage d'air (6) en permanence dans le premier état de commutation, à l'apparition du signal de puissance, et dans le second état de commutation, à l'apparition seule du signal de freinage, et qui, à la retombée du signal de freinage et en l'absence de signal de puissance, retarde dans le temps, par rapport à l'instant de la retombée du signal de freinage, la commutation qui ramène le clapet de guidage d'air (6) du second état de commutation dans le premier, au moyen d'un dispositif retardateur;
- le clapet de guidage d'air (6) étant commuté dans le second état de commutation, au début d'un actionnement des freins à friction (8), et étant recommuté, avec un retard temporel, dans le premier état de commutation, à la fin de l'actionnement des freins à friction (8), tandis qu'à l'apparition d'une demande de puissance au moteur à combustion interne (1), il est effectué, avec annulation du retard temporel, une commutation immédiate du clapet de guidage d'air (6) le ramenant dans le premier état de commutation.

2. Véhicule selon la revendication 1, caractérisé par un dispositif anti-blocage et anti-patinage automatique (19) pour les roues du véhicule, l'appareil de commande (13) pour le clapet de guidage d'air (6) détectant, à partir de signaux qui apparaissent dans le dispositif anti-blocage et antipatinage (19) et qui lui sont envoyés, un état de fonctionnement correspondant du véhicule.

3. Véhicule selon la revendication 1 et 2, caractérisé par un système de contrôle direct ou indirect de la température des freins à friction (8), le clapet de guidage d'air (6) n'étant positionnable dans le second état de commutation qu'en cas de détection, par le système de contrôle de température (capteur de température 18, ligne de transmission de signaux 17, appareil de commande 13), d'une température des freins à friction (8), dépassant une température de seuil fixée.

4. Véhicule selon la revendication 1 et 3, caractérisé en ce que le système de contrôle de température (capteur de température 18, ligne de transmission de signaux 17, appareil de commande 13), positionne continuellement le clapet de guidage d'air (6) dans le second état de commutation en cas de présence, sur les freins à friction (8), d'une température dépassant une température de seuil fixée.

5. Véhicule selon une ou plusieurs des revendications précédentes, caractérisé en ce que le clapet de guidage d'air (6) est inséré dans une partie du conduit d'air (4, 4a, 4b) qui est disposée en aval du radiateur (5) pour l'air de suralimentation.

6. Véhicule selon une ou plusieurs des revendications précédentes, caractérisé en ce que le compresseur à suralimentation est entraîné mécaniquement en permanence par le moteur à combustion interne.
